# DEMANDE DE BREVET EUROPEEN

(11) **EP 4 350 568 A1**
(43) Date de publication de la demande: **10.04.2024**
(21) Numéro de dépôt: 23196576.5
(22) Date de dépôt: 11.09.2023
(51) Int. Cl.: G06F 30/23, G01L 5/00, G06F 30/27

(54) **MÉTHODE D'ESTIMATION D'UN CHAMP DE CONTRAINTES RÉSIDUELLES DANS UNE PIÈCE EN COURS D'USINAGE ET PROCÉDÉ D'USINAGE UTILISANT UNE TELLE MÉTHODE**

(30) Priorité: 30.09.2022 FR 2209972
(71) Demandeur: AIRBUS OPERATIONS (SAS), 31060 Toulouse (FR)
(72) Inventeur: CHABEAUTI, Hugo, 31060 TOULOUSE (FR); RITOU, Mathieu, 44475 CARQUEFOU (FR); GERMAIN, Guenael, 49035 ANGERS (FR); ORTMANS, Frédéric, 31060 TOULOUSE (FR); LAVISSE, Bruno, 49035 ANGERS (FR)
(74) Mandataire: Gevers & Orès

(57) **Abrégé**

- Méthode d'estimation d'un champ de contraintes résiduelles dans une pièce en cours d'usinage et procédé d'usinage utilisant ladite méthode.
- La méthode d'estimation d'un champ de contraintes résiduelles (RS) dans une pièce (1) comprend une étape de mesure consistant à mesurer des paramètres géométriques (6) de la pièce (1) de manière à déterminer un profil géométrique (7) de ladite pièce (1), une première étape d'estimation consistant à estimer, à partir du profil géométrique (7) et d'un modèle d'estimation (10), des déformations ultérieures (11) que la pièce (1) est susceptible de subir lors de la suite de son usinage et une seconde étape d'estimation consistant à estimer, à partir desdites déformations ultérieures (11) et d'un modèle de simulation (13), le champ de contraintes résiduelles (RS) dans la pièce (1), ladite méthode permettant ainsi d'estimer de façon simple et rapide le champ de contraintes résiduelles (RS) dans la pièce (1) sans recourir à un calcul direct desdites contraintes résiduelles.

## Description

### Domaine technique

La présente invention concerne une méthode d'estimation d'un champ de contraintes résiduelles dans une pièce en cours d'usinage, en particulier pour une pièce d'un aéronef ainsi qu'un procédé d'usinage utilisant une telle méthode.

### Etat de la technique

On sait que certains procédés de fabrication induisent dans les pièces fabriquées des contraintes résiduelles, à savoir des contraintes mécaniques qui sont présentes dans une pièce lorsque celle-ci est à l'équilibre sans charge extérieure. Ces contraintes résiduelles peuvent causer sur les pièces finales des déformations importantes. En conséquence, les pièces ainsi déformées sont parfois inutilisables en l'état, en particulier dans le cadre d'assemblages, et nécessitent des opérations de rectification parfois longues et coûteuses.

Une telle situation peut se présenter notamment dans le secteur aéronautique, dans lequel des pièces métalliques de grandes tailles sont usinées, généralement avec de grandes profondeurs de passe et à partir de plaques ou tôles brutes épaisses ou de pièces brutes forgées. Ces conditions sont particulièrement favorables à la génération de contraintes résiduelles avec une forte variabilité et donc à l'apparition de déformations difficilement prévisibles.

Une solution pour éviter de générer des contraintes résiduelles consiste à introduire des relâchements (ou libérations) de contraintes en cours d'usinage, par exemple en débridant les pièces entre chaque étape d'usinage. Ces relâchements ont pour effet de réduire les déformations finales et d'absorber leur variabilité. Cependant, pour être réellement efficace, cette solution nécessite la mise en oeuvre d'un grand nombre d'étapes d'usinage avec des profondeurs de passes faibles, ce qui augmente considérablement le temps d'usinage et donc le coût de fabrication. De plus, elle nécessite également un outillage spécifique qui peut être lourd et coûteux à mettre en place.

Une autre solution serait de mesurer les contraintes résiduelles dans les pièces usinées afin d'adapter l'usinage en conséquence. Toutefois, les méthodes de mesure usuelles ne sont pas applicables dans un contexte industriel puisqu'elles sont soit destructives, soit très coûteuses, et parfois même impossibles à mettre en oeuvre en raison de paramètres non mesurables.

Cette situation n'est donc pas complètement satisfaisante.

### Exposé de l'invention

La présente invention a pour objet de proposer une solution pour remédier aux inconvénients précités. Elle concerne une méthode d'estimation d'un champ de contraintes résiduelles dans une pièce en cours d'usinage, ladite pièce étant obtenue à partir d'une pièce brute.

Selon l'invention, la méthode comprend au moins les étapes suivantes mises en oeuvre de façon successive :
- une étape de mesure consistant à mesurer des paramètres géométriques de la pièce à un instant donné de son usinage auquel on souhaite connaître le champ de contraintes résiduelles dans ladite pièce, de manière à déterminer un profil géométrique de ladite pièce ;
- une première étape d'estimation consistant à estimer, à partir du profil géométrique et d'un modèle d'estimation, des déformations ultérieures que la pièce est susceptible de subir lors de la suite de son usinage, ledit modèle d'estimation étant préalablement entraîné à l'aide d'un apprentissage automatique sur des pièces dites d'entraînement de manière à pouvoir utiliser le profil géométrique de la pièce et des données préenregistrées sur les pièces d'entraînement pour estimer lesdites déformations ultérieures de la pièce ; et
- une seconde étape d'estimation consistant à estimer, à partir des déformations ultérieures estimées à la première étape d'estimation et d'un modèle de simulation, le champ de contraintes résiduelles dans la pièce, ledit modèle de simulation correspondant à un modèle physique générique basé sur des simulations définissant une variabilité du champ de contraintes résiduelles dans la pièce en fonction de paramètres de fabrication de la pièce brute.

Ainsi, la méthode permet d'estimer le champ de contraintes résiduelles dans la pièce en cours d'usinage sans recourir à une mesure directe desdites contraintes résiduelles. Elle permet notamment d'estimer le champ de contraintes résiduelles très tôt lors de l'usinage de la pièce. Il est alors possible d'anticiper le comportement de ladite pièce lors de la suite de l'usinage et d'ajuster ledit usinage comme préciser ci-dessous.

La méthode est simple, rapide et peu coûteuse à mettre en oeuvre. De plus, elle peut être intégrée facilement à un procédé d'usinage dans le but de réaliser des estimations de champ de contraintes résiduelles en temps réel sur des pièces en cours d'usinage comme précisé ci-dessous.

Avantageusement, à l'étape de mesure, une analyse en composantes principales est appliquée aux paramètres géométriques mesurés de manière à réduire la dimension du profil géométrique de la pièce à déterminer.

De plus, de façon avantageuse, le modèle d'estimation est entraîné en mettant en oeuvre une méthode de régression permettant d'estimer des déformations à partir des données mesurées sur les pièces d'entraînement.

Par ailleurs, avantageusement, le profil géométrique de la pièce déterminé à l'étape de mesure est utilisé pour enrichir le modèle d'estimation.

En outre, de façon avantageuse, le modèle de simulation du champ de contraintes résiduelles est basé sur des simulations à éléments finis et il est construit à l'aide d'une décomposition en valeurs singulières.

Dans un mode de réalisation préféré, le modèle de simulation est apte à définir une variabilité du champ de contraintes résiduelles dans la pièce en se basant sur des paramètres de fabrication de la pièce brute, ladite pièce brute ayant subie au moins l'une des opérations de fabrication suivantes : un forgeage, un traitement thermique, une compression à froid, un usinage.

La présente invention concerne également un procédé d'usinage d'une pièce brute pour réaliser une pièce finie.

Selon l'invention, ledit procédé d'usinage comprend les étapes suivantes mises en oeuvre de façon successive :
- une étape de mesure initiale consistant à mesurer des paramètres géométriques de ladite pièce brute ;
- une étape d'usinage initiale consistant à réaliser au moins une opération d'usinage initiale sur la pièce brute de manière à obtenir une première pièce intermédiaire ;
- au moins une suite d'étapes comprenant les étapes suivantes mises en oeuvre de façon successive :
   - une première étape de traitement consistant à estimer un champ de contraintes résiduelles dans la première pièce intermédiaire en mettant en oeuvre la méthode d'estimation d'un champ de contraintes résiduelles décrite ci-dessus ;
   - une seconde étape de traitement consistant à estimer, à partir du champ de contraintes résiduelles dans la première pièce intermédiaire estimé à la première étape de traitement, un comportement mécanique ultérieur de ladite première pièce intermédiaire lors d'opérations d'usinage ultérieures ;
   - une étape de correction consistant à modifier la valeur d'au moins un paramètre d'usinage desdites opérations d'usinage ultérieures en fonction du comportement mécanique ultérieur de la première pièce intermédiaire estimé à la seconde étape de traitement, dans le but de minimiser des déformations de la première pièce intermédiaire lors desdites opérations d'usinage ultérieures ; et
   - une étape d'usinage consistant à réaliser au moins une opération d'usinage sur la première pièce intermédiaire, ladite opération d'usinage prenant en compte ladite valeur modifiée dudit paramètre d'usinage, de manière à obtenir une seconde pièce intermédiaire.

Dans un premier mode de réalisation préféré du procédé, la seconde pièce intermédiaire obtenue à l'étape d'usinage correspond à la pièce finie à réaliser.

Dans un second mode de réalisation, la suite d'étapes est mise en oeuvre de façon itérative et à chaque itération la première pièce intermédiaire correspond à la seconde pièce intermédiaire de l'itération précédente, ladite suite d'étapes étant répétée jusqu'à ce que la seconde pièce intermédiaire corresponde à la pièce finie à réaliser.

Par ailleurs, dans un mode de réalisation préféré, l'étape d'usinage initiale comprend une unique opération d'usinage initiale.

En outre, avantageusement, le ou les paramètres d'usinages comprennent au moins l'un des paramètres suivants :
- une position d'au moins un outil d'usinage ;
- une orientation du ou des outil(s) d'usinage ;
- une position de la première pièce intermédiaire à usiner;
- une orientation de la première pièce intermédiaire à usiner;
- une trajectoire du ou des outil(s) d'usinage ;
- une profondeur de passe du ou des outil(s) d'usinage ;
- une vitesse de coupe du ou des outil(s) d'usinage.

De plus, de façon avantageuse, à l'étape de mesure initiale, les paramètres géométriques sont mesurés à l'aide d'au moins l'un des outils de mesure suivants : une machine à mesurer tridimensionnelle, une machine à scanner en trois dimensions.

### Brève description des figures

Les figures annexées feront bien comprendre comment l'invention peut être réalisée. Sur ces figures, des références identiques désignent des éléments semblables.
La figure 1 est un schéma synoptique d'un mode de réalisation préféré d'une méthode d'estimation d'un champ de contraintes résiduelles.
La figure 2 est un schéma synoptique d'un mode de réalisation préféré d'un procédé d'usinage utilisant la méthode de la figure 1.
La figure 3 est un vue schématique d'un système d'usinage mettant en oeuvre le procédé d'usinage de la figure 2.
La figure 4 est une vue schématique d'une pièce usinée à l'aide du système d'usinage de la figure 3 à différentes étapes de son usinage.
La figure 5 est une vue en coupe de la pièce usinée de la figure 4 avec une représentation schématique d'un champ de contraintes résiduelles estimé.

### Description détaillée

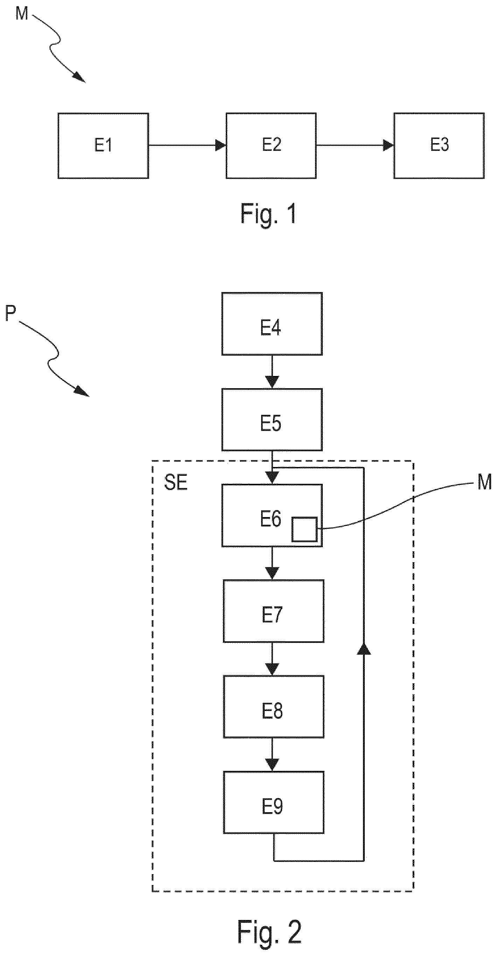

Le méthode M illustrant l'invention et représentée schématiquement dans un mode de réalisation particulier sur la figure 1 permet d'estimer un champ de contraintes résiduelles RS (pour « Residual Stress » en anglais) dans une pièce 1 comme préciser ci-dessous.

Plus particulièrement, la méthode M est destinée à être utilisée en cours d'usinage de la pièce 1, de préférence le plus tôt possible, afin de connaître le champ de contraintes résiduelles RS dans ladite pièce 1 qui est en train d'être usinée. Cette connaissance à un stade précoce de l'usinage permet d'ajuster l'usinage de manière à minimiser les déformations que la pièce 1 est destinée à subir lors de la suite de l'usinage. Une telle application est décrite ci-après.

On entend par « contraintes résiduelles » des contraintes multiaxiales statiques auto-équilibrées existant dans une pièce isolée, de température uniforme et en l'absence de toute charge extérieure. L'expression « champ de contraintes résiduelles » fait référence aux contraintes résiduelles et à leur répartition dans la pièce.

De plus, dans le cadre de la présente invention, on fera référence à des actions (mesures, estimations, ...) réalisées « lors d'un usinage » ou « en cours d'usinage ». Ces expressions signifient que lesdites actions peuvent être réalisées à tout instant durant un procédé d'usinage d'une pièce, à savoir à partir du début de son usinage et jusqu'à son usinage complet. En particulier, ces actions peuvent être réalisées entre les différentes étapes d'usinage dudit procédé d'usinage (lorsque la pièce n'est pas en train d'être usinée).

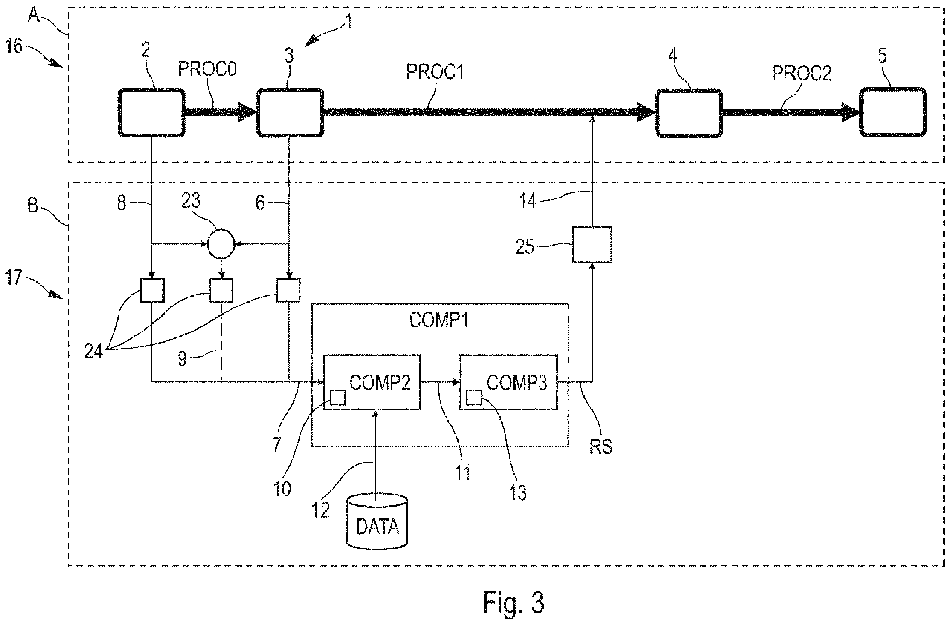

Dans un mode de réalisation préféré, la méthode M peut être mise en oeuvre, au moins partiellement, de façon logicielle par une unité de traitement COMP1 (pour « Computation unit » en anglais) usuelle comme représenté sur la figure 3 illustrant un exemple d'application. Cet exemple montre schématiquement une application préférée de la méthode M lors de l'usinage de la pièce 1 qui sera décrite plus en détail dans la suite de la description.

La pièce 1 peut correspondre à une pièce de taille variée et/ou de forme variée. De préférence, il s'agit d'une pièce de grande taille présentant une forme de poutre, à savoir une pièce dont l'une des dimensions est grande par rapport à ses autres dimensions. La pièce 1 est réalisée à partir d'une pièce brute 2 obtenue par des procédés de fabrication usuels. De préférence, la pièce brute 2 correspond à une pièce forgée.

Par ailleurs, la pièce 1 correspond à une pièce prise à un instant donné lors de l'usinage, par exemple une pièce prise après une étape d'ébauche donnée ou après une étape de finition donnée. De préférence, la méthode M est mise en oeuvre le plus tôt possible lors de l'usinage.

En outre, la pièce 1 peut être réalisée dans des matériaux métalliques variés, par exemple en aluminium, en acier ou en titane.

Dans le mode de réalisation préféré représenté sur la figure 1, la méthode M comprend les étapes suivantes mises en oeuvre de façon successive : une étape de mesure E1, une première étape d'estimation E2 et une seconde étape d'estimation E3.

L'étape de mesure E1 consiste à mesurer des paramètres géométriques 6 (figure 3) de la pièce 1 à un instant donné de son usinage, instant donné auquel on souhaite connaître le champ de contraintes résiduelles RS. Les paramètres géométriques 6 mesurés peuvent correspondre à des mesures de positions de points sur la pièce 1 de manière à déterminer des dimensions de ladite pièce 1. Les paramètres géométriques 6 ainsi mesurés permettent de déterminer un profil géométrique 7 de la pièce 1.

Ce profil géométrique 7 peut comprendre des dimensions mesurées sur la pièce 1 à l'instant donné ainsi que d'autres données. Par exemple, il peut comprendre d'autres paramètres géométriques de la pièce 1 mesurés à des étapes d'usinage antérieures ou encore des déformations 9 que ladite pièce 1 a subies lors d'étapes d'usinage antérieures. Ces déformations 9 peuvent être dues aux contraintes résiduelles dans la pièce 1 et peuvent se manifester sous différentes formes, par exemple la pièce 1 peut être tordue, torsadée ou encore cintrée, en particulier dans le cas de pièces de forme allongée.

L'étape d'estimation E2 suit l'étape de mesure E1 et consiste à estimer, à l'aide d'un modèle d'estimation 10 (figure 3), en prenant en compte le profil géométrique 7 déterminé à l'étape de mesure E1, des déformations ultérieures 11 que la pièce 1 est susceptible de subir lors de la suite de son usinage. Le modèle d'estimation 10 correspond à un modèle numérique pouvant être mis en oeuvre de façon logicielle par une unité de traitement COMP2 usuelle de type microprocesseur.

Le modèle d'estimation 10 est préalablement entraîné à l'aide d'un apprentissage automatique sur des pièces dites d'entraînement. Par exemple, le modèle d'estimation 10 peut être entraîné à l'aide d'une intelligence artificielle prenant en compte des données préenregistrées 12 provenant des pièces d'entraînement. De manière non limitative, ces données préenregistrées 12 comprennent au moins des paramètres géométriques mesurés sur lesdites pièces d'entraînement. Par ailleurs, les données préenregistrées 12 peuvent être stockées dans une base de donnée DATA (pour « Database » en anglais) comme représenté dans l'exemple d'application sur la figure 3.

Les pièces d'entraînement correspondent, de préférence, à des pièces similaires à la pièce 1 qui sont usinées avec un usinage similaire à celui de la pièce 1. Par « pièces similaires », on entend des pièces de mêmes dimensions, réalisées dans le même matériau, possédant les mêmes caractéristiques mécaniques et obtenues à partir de pièces brutes similaires (à savoir des pièces brutes obtenues avec le même procédé de fabrication). Par « usinage similaire », on entend un procédé d'usinage comprenant les mêmes étapes d'usinage avec les mêmes paramètres d'usinage. De préférence, le modèle d'estimation 10 est entraîné avec des données provenant de pièces d'entraînement usinées sur la ou les mêmes machines servant à usiner la pièce 1.

Le modèle d'estimation 10 est entraîné de manière à pouvoir utiliser le profil géométrique 7 de la pièce 1 et les données préenregistrées 12 dans la base de données DATA pour estimer les déformations ultérieures 11 de la pièce 1.

Par ailleurs, l'étape d'estimation E3 consiste à estimer, à l'aide d'un modèle de simulation 13, en prenant en compte les déformations ultérieures 11 estimées à l'étape d'estimation E2, un champ de contraintes résiduelles RS dans la pièce 1.

Le modèle de simulation 13 correspond à un modèle physique générique basé sur des simulations thermomécaniques. Il peut s'agir, en particulier, de simulations numériques à éléments finis. En outre, le modèle de simulation 13 est un modèle mathématique pouvant être mis en oeuvre de façon logicielle par une unité de traitement COMP3 usuelle de type microprocesseur.

Plus particulièrement, le modèle de simulation 13 repose sur des calculs théoriques des contraintes résiduelles potentielles dans la pièce 1. Ces calculs théoriques sont basés sur des connaissances concernant la pièce brute 2, plus précisément concernant sa fabrication et sa géométrie. En effet, en connaissant les paramètres des différentes étapes de fabrication et la géométrie de la pièce brute 2, on est capable de calculer des contraintes résiduelles potentiellement induites par chacune desdites étapes de fabrication. Par exemple, ces paramètres peuvent comprendre, de manière non exhaustive, des valeurs de dimensions particulières de la pièce brute 2, des différences de dimensions entre certaines parties de la pièce brute 2, des valeurs d'efforts ou de pressions liés à des opérations de fabrication de la pièce brute 2 (compression, usinage, ...), des valeurs d'erreur relative auxdites opérations de fabrication ou encore des valeurs de température pour des traitements thermiques.

En fonction de ces paramètres liés à la fabrication de la pièce brute 2, le modèle de simulation 13 est apte à définir une variabilité de champ de contraintes résiduelles dans la pièce 1. En corrélant cette information de variabilité avec les déformations ultérieures 11 de la pièce 1 estimées à l'étape d'estimation E2, on est en mesure d'estimer le champ de contrainte résiduelles RS dans la pièce 1.

Dans une réalisation préférée, le modèle de simulation 13 correspond à un modèle dit réduit, à savoir une approximation des simulations thermomécaniques permettant d'obtenir un résultat équivalant en réduisant grandement le temps de calcul. Le modèle de simulation 13 peut être réduit en utilisant des méthodes mathématiques usuelles. Par exemple, il peut être construit en utilisant une décomposition en valeurs singulières (ou « Single Value Décomposition » en anglais).

Ainsi, la méthode M permet d'estimer le champ de contraintes résiduelles RS dans la pièce 1 en cours d'usinage sans recourir à un calcul direct desdites contraintes résiduelles. Elle permet notamment d'estimer le champ de contraintes résiduelles RS très tôt lors de l'usinage de la pièce 1. Il est alors possible d'anticiper le comportement de ladite pièce 1 lors de la suite de l'usinage et d'ajuster ledit usinage comme précisé ci-dessous. La méthode M est simple, rapide et peu coûteuse à mettre en oeuvre. De plus, elle peut être intégrée facilement à un procédé d'usinage dans le but de réaliser des estimations de champ de contraintes résiduelles en temps réel sur des pièces en cours d'usinage.

Dans un mode de réalisation particulier, l'étape de mesure E1 comprend des traitements de données appliqués aux mesures de paramètres réalisées sur la pièce 1. En effet, dans certains cas, par exemple lorsque le nombre de mesures effectuées est grand par rapport au nombre de pièces dont on mesure les paramètres et/ou lorsque les paramètres mesurés sont fortement corrélés entre eux, il peut exister des biais statistiques. Il peut donc être intéressant de prendre en compte uniquement les paramètres qui ont un effet significatif sur ce que l'on cherche à étudier à l'aide des traitements de données.

Ainsi, dans ce mode de réalisation particulier, une analyse en composantes principales (ou « Principal Component Analysis » en anglais) sont appliquées aux paramètres géométriques mesurées sur la pièce 1. On peut également appliquer une sélection de variables ascendantes. Ces traitements de données permettent de réduire la dimension du profil géométrique de la pièce 1 déterminé, de manière à utiliser uniquement les données pertinentes pour estimer les déformations ultérieures 11 de la pièce 1 et ainsi limiter les temps de calcul.

En outre, dans un mode de réalisation particulier, le modèle d'estimation 10 est entraîné en mettant en oeuvre une méthode de régression permettant d'estimer des déformations à partir de données mesurées sur les pièces d'entraînement. Par exemple, il peut s'agir d'une régression Ridge. Par rapport à une régression linéaire classique, une régression Ridge permet de réduire le risque de surcharger en données l'apprentissage automatique du modèle d'estimation 10. Elle permet donc d'augmenter les performances de l'apprentissage automatique, notamment en présence de bruits. Toutefois, selon l'application considérée, d'autres méthodes de régression peuvent être préférées. De manière non limitative, il peut s'agir d'une méthode mettant en oeuvre une régression Lasso, des réseaux de neurones, des arbres de décisions, un algorithme des k plus proches voisins ou k-NN (pour « k-nearest neighbor » en anglais).

En outre, dans un mode de réalisation particulier, le profil géométrique 7 de la pièce 1 déterminé à l'étape de mesure E1 est utilisé pour enrichir le modèle d'estimation 10. En effet, il peut être intéressant de poursuivre l'entraînement du modèle d'estimation 10 au-delà des seules pièces d'entraînement. Aussi, dans ce mode de réalisation particulier, le profil géométrique 7 de la pièce 1 déterminé à l'étape de mesure E1 est enregistré dans la base de donnée DATA et ajouté aux données préenregistrées 12. L'apprentissage automatique peut alors être mis à jour en prenant en compte les nouvelles données ajoutées à la base de données DATA.

Ce mode de réalisation particulier, permet d'affiner un peu plus le modèle d'estimation 10 à chaque fois que la méthode M est mise en oeuvre, ce qui permet d'augmenter sa précision et de correspondre au plus près à la réalité. Il est particulièrement intéressant dans le cadre d'applications avec un nombre de pièces d'entraînement réduit, par exemple pour l'usinage de pièces en petites séries ou de pièces complexes et/ou coûteuses.

Par ailleurs, de manière non limitative, le modèle de simulation 13 est apte à définir une variabilité du champ de contraintes résiduelles dans la pièce 1 pour une pièce brute 2 obtenue par au moins l'un des procédés de fabrication suivants : par forgeage, par traitement thermique, par compression à froid, par usinage. La pièce brute 2 peut notamment être obtenue par une combinaison de ces procédés de fabrication.

La méthode M décrite ci-dessus est particulièrement adaptée à une utilisation dans un procédé d'usinage pour lequel une connaissance du champ de contraintes résiduelles RS dans la pièce 1 en cours d'usinage est importante.

Un procédé P d'usinage utilisant la méthode M est représenté schématiquement sur la figure 2. De plus, des applications de ce procédé P sont représentées à titre d'exemple, de la figure 3 à la figure 5.

Il s'agit d'un procédé P d'usinage qui, en partant d'une pièce brute 2 permet de réaliser une pièce finie 5 en passant par un ou plusieurs états appelés ci-après « pièces intermédiaires ». La pièce 1 de la méthode M correspond à la pièce intermédiaire sur laquelle on applique ladite méthode M.

Le procédé P comprend les étapes suivantes mises en oeuvre de façon successive :
- une étape de mesure initiale E4 consistant à mesurer des paramètres géométriques 8 de la pièce brute 2 ;
- une étape d'usinage initiale E5 consistant à réaliser au moins une opération d'usinage PROCO (pour « Processing » en anglais) sur la pièce brute 2 de manière à obtenir une première pièce intermédiaire 3 ; et
- au moins une suite d'étapes SE permettant d'obtenir la pièce finie 5, comprenant les étapes suivantes mises en oeuvre de façon successive :
   - une étape de traitement E6 consistant à estimer un champ de contraintes résiduelles RS dans la pièce intermédiaire 3 en mettant en oeuvre la méthode M décrite précédemment, la pièce intermédiaire 3 correspondant à la pièce 1 ;
   - une étape de traitement E7 consistant à estimer, à partir du champ de contraintes résiduelles RS dans la pièce intermédiaire 3 estimé à l'étape de traitement E6, un comportement mécanique ultérieur de ladite première pièce intermédiaire 3 lors d'opérations d'usinage ultérieures ;
   - une étape de correction E8 consistant à modifier la valeur d'au moins un paramètre d'usinage 14 desdites opérations d'usinage ultérieures en fonction du comportement mécanique ultérieur de la pièce intermédiaire 3 estimé à l'étape de traitement E7. Cette modification est réalisée dans le but de minimiser des déformations de la pièce intermédiaire 3 lors desdites opérations d'usinage ultérieures ; et
   - une étape d'usinage E9 consistant à réaliser une opération d'usinage PROC1, PROC2 sur la pièce intermédiaire 3. Cette opération d'usinage PROC1, PROC2 prend en compte la valeur modifiée du paramètre d'usinage 14, de manière à obtenir une seconde pièce intermédiaire 4.

Suivant le mode de réalisation, la suite d'étape SE peut être mise en oeuvre de manière à obtenir directement la pièce finie 5 ou elle peut être mise en oeuvre plusieurs fois jusqu'à obtenir la pièce finie 5.

Dans un mode de réalisation préféré, la pièce intermédiaire 4, obtenue à l'étape d'usinage E9, correspond à la pièce finie 5 à réaliser.

Toutefois, dans un mode de réalisation particulier, la suite d'étapes SE du procédé P est mise en oeuvre de façon itérative. A chaque itération, la pièce intermédiaire 3 correspond à la pièce intermédiaire 4 de l'itération précédente. La suite d'étapes SE est ainsi répétée jusqu'à ce que la pièce intermédiaire 4 corresponde à la pièce finie 5 à réaliser.

Dans l'exemple d'application représenté sur la figure 3, le procédé P comporte deux itérations de la suite d'étapes SE. Toutefois, il peut comporter un nombre d'itérations supérieur à deux. En outre, la méthode M peut être utilisée à chaque itération ou seulement pour certaines d'entre elles.

Le procédé P peut ainsi être mis en oeuvre pour estimer le champ de contraintes résiduelles RS dans la pièce intermédiaire 3 entre chacune des opérations d'usinage PROC1, PROC2. L'évolution du champ de contraintes résiduelles RS dans la pièce intermédiaire 3 peut alors être prise en compte à tout instant en cours d'usinage. De plus, le ou les paramètres d'usinage 14 peuvent être ajustés en conséquence, et ce, en temps réel. Cela permet notamment de minimiser les déformations dues aux contraintes résiduelles de manière personnalisée pour chaque pièce usinée.

Dans une réalisation préférée, l'étape d'usinage initiale E5 comprend une unique opération d'usinage PROCO. Ainsi, la méthode M est mise en oeuvre directement après une seule opération d'usinage sur la pièce brute 2. Cela permet d'estimer le champ de contraintes résiduelles RS très tôt lors du procédé P et par conséquent de corriger efficacement le ou les paramètres d'usinage 14. Cette estimation des contraintes résiduelles à un stade précoce du procédé P est particulièrement adaptée à des usinages comportant un nombre réduit d'opérations d'usinage.

De façon non limitative, les paramètres d'usinage 14 qui sont aptes à être corrigés lors de la mise en oeuvre du procédé P peuvent comprendre les paramètres suivants :
- une position d'un outil d'usinage 15 ;
- une orientation de l'outil d'usinage 15 ;
- une position de la pièce intermédiaire 3 ;
- une orientation de la pièce intermédiaire 3 ;
- une trajectoire de l'outil d'usinage 15 ;
- une profondeur de passe de l'outil d'usinage 15 ;
- une vitesse de coupe de l'outil d'usinage 15.

Les paramètres d'usinage 14 à corriger dépendent du procédé d'usinage considéré. Il peut s'agir d'un unique paramètre d'usinage ou d'une pluralité de paramètres d'usinage. De même, les paramètres d'usinage 14 à corriger peuvent concerner un unique outil d'usinage ou une pluralité d'outils d'usinage.

En outre, les paramètres d'usinage 14 peuvent être corrigés de façon automatique, par une unité de traitement prévue à cet effet, ou de façon manuelle, par exemple par un opérateur.

Par ailleurs, à l'étape de mesure initiale E4 et à l'étape de mesure E1, les paramètres géométriques 8 de la pièce brute 2 et les paramètres géométriques 6 de la pièce intermédiaire 3 peuvent être mesurés à l'aide d'outils de mesure usuels. De manière non limitative, lesdits paramètres géométriques 8 et 6 peuvent être mesurés par une machine à mesurer tridimensionnelle ou une machine à numériser par balayage en trois dimensions (aussi appelée « scanner 3D »).

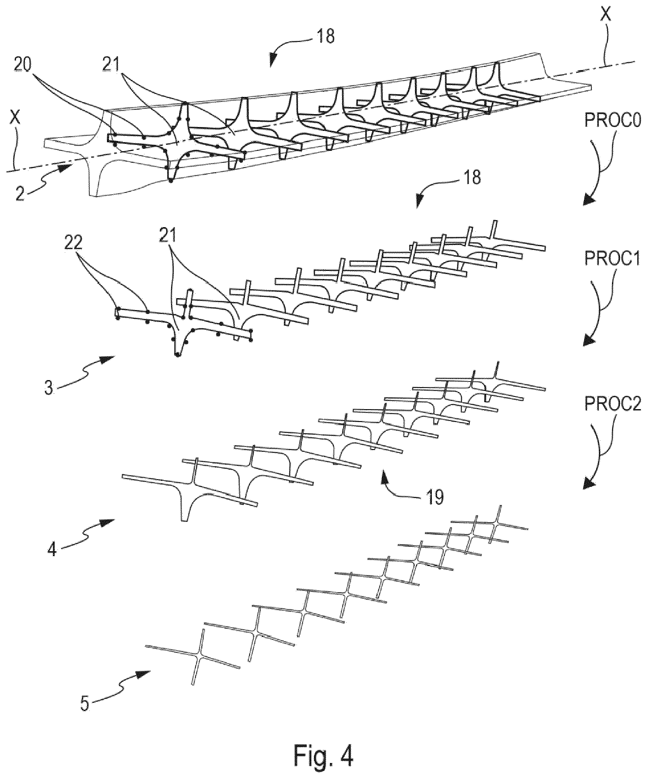

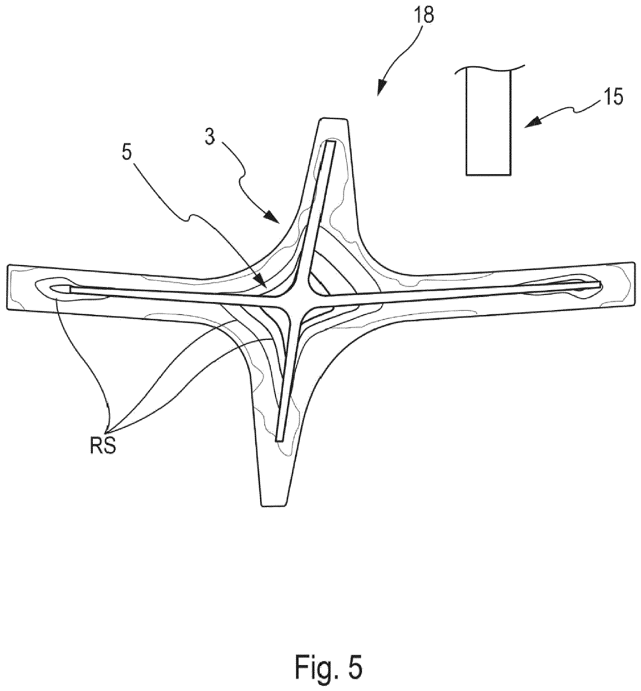

À titre d'exemple, une application du procédé P utilisant la méthode M est représentée schématiquement de la figure 3 à la figure 5. Cette application concerne la mise en oeuvre d'un mode de réalisation du procédé P dans lequel un usinage de la pièce brute 2 permet d'obtenir la pièce finie 5. Il s'agit de l'usinage d'une pièce aéronautique, appelée « croix » dans la suite de la description. La croix présente une forme allongée, droite avec une section transversale en forme de croix, comme illustré sur la figure 4 et la figure 5.

La pièce brute 2 correspond à une pièce forgée présentant grossièrement la forme de la croix. La pièce finie 5 correspond à la croix que l'on souhaite réaliser à l'aide du procédé P. Des vues de la croix à différentes étapes de son usinage sont représentées sur la figure 4, avec notamment une vue de la pièce brute 2. Sur les autres vues de la figure 4, seules des sections de la croix sont représentées.

Comme représenté schématiquement sur la figure 3, l'usinage mis en oeuvre par le procédé P est réalisé par un système d'usinage usuel comportant notamment une partie machine 16, illustrée par un cadre A, et une partie traitement 17, illustrée par un cadre B.

La partie machine 16 est apte à mettre en oeuvre les opérations d'usinage PROCO, PROC1 et PROC2 représentées schématiquement par des flèches en gras sur la figure 3 et la figure 4. Ces opérations d'usinage PROCO, PROC1 et PROC2 correspondent à des opérations d'enlèvement de matière usuelles. Plus particulièrement, la pièce brute 2 subie tout d'abord l'opération d'usinage PROCO correspondant à un premier enlèvement de matière sur une partie supérieure 18 de la croix pour obtenir la pièce intermédiaire 3. La pièce intermédiaire 3 subie ensuite l'opération d'usinage PROC1 correspondant à un second enlèvement de matière sur la partie supérieure 18 de la croix pour obtenir la pièce intermédiaire 4. La pièce intermédiaire 4 subie finalement l'opération d'usinage PROC2 correspondant à un enlèvement de la matière sur une partie inférieure 19 de la croix pour obtenir la pièce finie 5.

Par ailleurs, la partie traitement 17 comporte l'unité de traitement COMP1 apte à mettre en oeuvre la méthode M entre l'opération d'usinage PROCO et l'opération d'usinage PROC1. En effet, une fois l'opération d'usinage PROCO réalisée et la pièce intermédiaire 3 obtenue, on souhaite estimer le champ de contraintes résiduelles RS dans ladite pièce intermédiaire 3 afin d'ajuster la suite de l'usinage en conséquence.

Ainsi, préalablement à l'opération d'usinage PROCO, les paramètres géométriques 8 sont mesurés sur la pièce brute 2. Cette étape de mesure consiste à palper des points 20 en plusieurs endroits sur ladite pièce brute 2. Plus particulièrement, les points 20 sont palpés sur des pourtours de la pièce brute 2 au niveau d'une pluralité de sections transversales 21 selon une direction longitudinale de la croix représentée par un axe X-X sur la figure 4. Seuls les points 20 de la première section 21 sont représentés sur la figure 4.

Une fois l'opération d'usinage PROCO réalisée, les paramètres géométriques 6 sont mesurées sur la pièce intermédiaire 3. Cette étape de mesure consiste à palper des points 22 en plusieurs endroits de ladite pièce intermédiaire 3. Plus particulièrement, les points 22 sont palpés sur des pourtours de la pièce intermédiaire 3 au niveau de la même pluralité de sections transversales 21 que pour les mesures réalisées sur la pièce brute 2.

La partie de traitement 17 comporte une unité de traitement 23 apte à réaliser une comparaison entre les paramètres géométriques 6 de la pièce intermédiaire 3 et les paramètres géométriques 8 de la pièce brute 2. Une fois les mesures réalisées sur la pièce intermédiaire 3, l'unité de traitement 23 réalise cette comparaison qui permet de déterminer les déformations 9 subies par la croix lors de l'opération d'usinage PROCO.

La partie de traitement 17 comporte également des unités de traitement 24 aptes à réaliser des traitements de données sur les paramètres géométriques 6 et 8 et sur les déformations 9. Ces unités de traitement 24 sont notamment aptes à appliquer une analyse en composantes principales aux données mesurées, à savoir les paramètres géométriques 6 et 8 et les déformations 9. Une fois les mesures et la comparaison réalisées, l'unité de traitement 24 applique lesdits traitements de données de manière à prendre en compte seulement les données les plus pertinentes et déterminer le profil géométrique 7.

La partie de traitement 17 comporte les unités de traitement COMP1, COMP2 et COMP3, ainsi que la base de données DATA. Elles permettent de mettre en oeuvre les étapes d'estimation E2 et E3 de la méthode M, à l'aide du modèle d'estimation 10 et du modèle de simulation 13. Une fois le profil géométrique 7 déterminé, le champ de contraintes résiduelles RS dans la pièce intermédiaire 3 est estimé à l'aide de la méthode M comme décrit précédemment.

La partie de traitement 17 comporte, de plus, une unité de traitement 25 apte à déterminer, à partir du champ de contraintes résiduelles RS, le comportement mécanique de la pièce intermédiaire 3 lors des opérations d'usinage PROC1 et PROC2. L'unité de traitement 25 est également apte à modifier la valeur d'au moins un paramètre d'usinage 14 desdites opérations d'usinage PROC1 et PROC2. Une fois le champ de contraintes résiduelles RS estimé, l'unité de traitement 25 réalise donc cette modification de la valeur du paramètre d'usinage 14 dans le but de minimiser des déformations ultérieures de la pièce intermédiaire 3 lors des opérations d'usinage PROC1 et PROC2.

Comme représenté schématiquement sur la figure 5 sur une coupe transversale de la pièce intermédiaire 3, l'outil 15 est destiné à réaliser un enlèvement de matière sur la partie supérieure 18. Sur cette figure 5, on a représenté (à l'intérieur de la pièce intermédiaire 3) la position théorique prévue de la pièce finie 5 une fois que toute la matière aura été retirée par les opérations d'usinage restantes. On a également représenté des lignes de champ illustrant le champ de contraintes résiduelles RS dans la pièce intermédiaire 3 estimé par la méthode M.

En fonction de ces contraintes résiduelles, l'unité de traitement 25 est configurée pour modifier la position de l'outil 15 pour réaliser les opérations d'usinage PROC1 et PROC2. Cette modification de la position de l'outil 15 a pour effet de changer sa trajectoire future lors desdites opérations d'usinage PROC1 et PROC2 par rapport à sa trajectoire initialement prévue. En conséquence, la position théorique de la pièce finie 5 dans la section de la pièce intermédiaire 3 est également modifiée. Cela permet d'enlever de la matière dans des zones qui sont plus avantageuses que d'autres en terme de déformations potentielles causées par les opérations d'usinage PROC1 et PROC2. En effet, suivant la valeur des contraintes résiduelles dans une zone donnée de la pièce intermédiaire 3, on est capable de savoir s'il est intéressant ou non d'enlever de la matière dans cette zone donnée, et le cas échéant dans quelle proportion il est préférable d'enlever de la matière.

Une fois la position de l'outil 15 modifiée, les opérations d'usinage PROC1 et PROC2 sont réalisées et la pièce finie 5 est obtenue. Cette pièce finie 5 présente alors peu de déformations et est conforme à la pièce souhaitée en terme de tolérances géométriques. La pièce souhaitée est donc obtenue sans avoir recours à des étapes supplémentaires de rectification.

Dans l'exemple particulier d'application décrit ci-dessus, le procédé P est mis en oeuvre pour un usinage comportant trois opérations d'usinages, PROCO, PROC1 et PROC2. Toutefois il est possible de l'adapter à des usinages comportant un nombre varié d'opérations d'usinage. De même, dans cet exemple d'application la méthode M est utilisée une seule fois en cours d'usinage, entre les opérations d'usinage PROCO et PROC1. Toutefois, dans d'autres applications il est possible d'utiliser la méthode M plusieurs fois au cours du même usinage. Cela peut permettre de vérifier que l'usinage a été correctement ajusté et/ou de le réajuster de manière plus fine.

La méthode M d'estimation de champ de contraintes résiduelles telles que décrite ci-dessus présente de nombreux avantages. En particulier :
- elle permet d'estimer le champ de contraintes résiduelles RS dans la pièce 1 sans recourir à un calcul direct desdites contraintes résiduelles ;
- elle permet d'estimer le champ de contraintes résiduelles RS dans la pièce 1 très tôt lors d'un usinage ;
- elle peut être mise en oeuvre en temps réel en cours d'usinage ;
- elle est facilement adaptable à des usinages variés ;
- elle est simple, rapide et peu coûteuse à mettre en oeuvre.

Par ailleurs, le procédé P d'usinage tel que décrit ci-dessus, utilisant la méthode M, présente également de nombreux avantages. En particulier :
- il permet de réaliser la pièce finie 5 présentant un minimum de déformations par rapport à la pièce souhaitée ;
- il permet d'éviter des déformations de la pièce finie 5 avec un nombre d'opérations d'usinage réduit et permet donc des gains en terme de temps et de coût d'usinage ;
- il permet d'éviter des étapes de rectifications de la pièce finie 5 qui peuvent être longues et coûteuses ; et
- il permet de réaliser des ajustements sur des usinages variés.

## Revendications

1. Procédé d'usinage d'une pièce brute (2) pour réaliser une pièce finie (5), ledit procédé (P) comprenant les étapes suivantes mises en oeuvre de façon successive :
- une étape de mesure initiale (E4) consistant à mesurer des paramètres géométriques (8) de la pièce brute (2) ;
- une étape d'usinage initiale (E5) consistant à réaliser au moins une opération d'usinage initiale (PROCO) sur la pièce brute (2) de manière à obtenir une première pièce intermédiaire (3) ; et
- au moins une suite d'étapes (SE) comprenant au moins les étapes suivantes mises en oeuvre de façon successive :
• une première étape de traitement (E6) consistant à estimer un champ de contraintes résiduelles (RS) dans la première pièce intermédiaire (3) en mettant en oeuvre une méthode (M) comprenant au moins les étapes suivantes mises en oeuvre de façon successive :
∘ une étape de mesure (E1) consistant à mesurer des paramètres géométriques (6) de la pièce intermédiaire (3) de manière à déterminer un profil géométrique (7) de ladite pièce intermédiaire (3) ;
∘ une première étape d'estimation (E2) consistant à estimer, à partir du profil géométrique (7) et d'un modèle d'estimation (10), des déformations ultérieures (11) que la pièce intermédiaire (3) est susceptible de subir lors de la suite de son usinage, ledit modèle d'estimation (10) étant préalablement entraîné à l'aide d'un apprentissage automatique sur des pièces dites d'entraînement de manière à pouvoir utiliser le profil géométrique (7) de la pièce intermédiaire (3) et des données préenregistrées (12) sur les pièces d'entraînement pour estimer lesdites déformations ultérieures (11) de la pièce finie (5) ; et
∘ une seconde étape d'estimation (E3) consistant à estimer, à partir des déformations ultérieures (11) estimées à la première étape d'estimation (E2) et d'un modèle de simulation (13), le champ de contraintes résiduelles (RS) dans la pièce intermédiaire (3), ledit modèle de simulation (13) correspondant à un modèle physique générique basé sur des simulations définissant une variabilité du champ de contraintes résiduelles (RS) dans la pièce intermédiaire (3) en fonction de paramètres de fabrication de la pièce brute (2),
• une seconde étape de traitement (E7) consistant à estimer, à partir du champ de contraintes résiduelles (RS) dans la première pièce intermédiaire (3) estimé à la première étape de traitement (E6), un comportement mécanique ultérieur de ladite première pièce intermédiaire (3) lors d'opérations d'usinage ultérieures ;
• une étape de correction (E8) consistant à modifier la valeur d'au moins un paramètre d'usinage (14) desdites opérations d'usinage ultérieures en fonction du comportement mécanique ultérieur de la première pièce intermédiaire (3) estimé à la seconde étape de traitement (E7), dans le but de minimiser des déformations de la première pièce intermédiaire (3) lors desdites opérations d'usinage ultérieures ;
• une étape d'usinage (E9) consistant à réaliser au moins une opération d'usinage (PROC1, PROC2) sur la première pièce intermédiaire (3), ladite opération d'usinage (PROC1, PROC2) prenant en compte ladite valeur modifiée dudit paramètre d'usinage (14), de manière à obtenir une seconde pièce intermédiaire (4).

2. Procédé selon la revendication 1,
**caractérisée en ce qu'**à l'étape de mesure (E1), une analyse en composantes principales est appliquée aux paramètres géométriques (6) mesurées de manière à réduire la dimension du profil géométrique (7) de la pièce intermédiaire (3) à déterminer.

3. Procédé selon l'une des revendications 1 et 2,
**caractérisée en ce que** le modèle d'estimation (10) est entraîné en mettant en oeuvre une méthode de régression permettant d'estimer des déformations à partir de données mesurées sur les pièces d'entraînement.

4. Procédé selon l'une quelconque des revendications précédentes,
**caractérisée en ce que** le profil géométrique (7) de la pièce intermédiaire (3) déterminé à l'étape de mesure (E1) est utilisé pour enrichir le modèle d'estimation (10).

5. Procédé selon l'une quelconque des revendications précédentes, **caractérisée en ce que** le modèle de simulation (13) du champ de contraintes résiduelles (RS) est basé sur des simulations à éléments finis et **en ce qu'**il est construit à l'aide d'une décomposition en valeurs singulières.

6. Procédé selon l'une quelconque des revendications précédentes, **caractérisée en ce que** le modèle de simulation (13) est apte à définir une variabilité du champ de contraintes résiduelles (RS) dans la pièce intermédiaire (3) en se basant sur des paramètres de fabrication de la pièce brute (2), ladite pièce brute (2) ayant subie au moins l'une des opérations de fabrication suivantes : un forgeage, un traitement thermique, une compression à froid, un usinage.

7. Procédé selon l'une quelconque des revendications précédentes, **caractérisé en ce que** la seconde pièce intermédiaire (4) obtenue à l'étape d'usinage (E9) correspond à la pièce finie (5) à réaliser.

8. Procédé selon l'une quelconque des revendications précédentes, **caractérisé en ce que** ladite suite d'étapes (SE) est mise en oeuvre de façon itérative et **en ce qu'**à chaque itération la première pièce intermédiaire (3) correspond à la seconde pièce intermédiaire (4) de l'itération précédente, ladite suite d'étapes (SE) étant répétée jusqu'à ce que la seconde pièce intermédiaire (4) corresponde à la pièce finie (5) à réaliser.

9. Procédé selon l'une quelconque des revendications précédentes, **caractérisée en ce que** l'étape d'usinage initiale (E5) comprend une unique opération d'usinage initiale (PROCO).

10. Procédé selon l'une quelconque des revendications précédentes, **caractérisé en ce que** le ou les paramètres d'usinages (14) comprennent au moins l'un des paramètres suivants :
- une position d'au moins un outil d'usinage (15) ;
- une orientation du ou des outils d'usinage (15) ;
- une position de la première pièce intermédiaire (3) à usiner;
- une orientation de la première pièce intermédiaire (3) à usiner;
- une trajectoire du ou des outils d'usinage (15) ;
- une profondeur de passe du ou des outils d'usinage (15) ;
- une vitesse de coupe du ou des outils d'usinage (15).

11. Procédé selon l'une quelconque des revendications précédentes,
**caractérisé en ce qu'**à l'étape de mesure initiale (E4) et à l'étapes de mesure (E1), les paramètres géométriques (6, 8) sont mesurés à l'aide d'au moins l'un des outils de mesure suivants : une machine à mesurer tridimensionnelle, une machine à scanner en trois dimensions.
